(19) Europäisches Patentamt
European Patent Office
Office européen des brevets

(11) **EP 2 384 248 B1**

(12) **EUROPÄISCHE PATENTSCHRIFT**

(45) Veröffentlichungstag und Bekanntmachung des Hinweises auf die Patenterteilung:
**20.02.2013 Patentblatt 2013/08**

(21) Anmeldenummer: **09808987.3**

(22) Anmeldetag: **29.12.2009**

(51) Int Cl.:
*B21F 27/12* *(2006.01)*     *B01J 19/32* *(2006.01)*
*D03D 25/00* *(2006.01)*     *E04B 1/19* *(2006.01)*

(86) Internationale Anmeldenummer:
**PCT/DE2009/001831**

(87) Internationale Veröffentlichungsnummer:
**WO 2010/075853 (08.07.2010 Gazette 2010/27)**

(54) **DREIDIMENSIONALE DRAHTSTRUKTUR IN LEICHTBAUWEISE UND VERFAHREN ZU DEREN HERSTELLUNG**

LIGHTWEIGHT THREE-DIMENSIONAL WIRE STRUCTURE, AND METHOD FOR THE PRODUCTION THEREOF

STRUCTURE DE FILS TRIDIMENSIONNELLE LÉGÈRE ET SON PROCÉDÉ DE FABRICATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.12.2008   DE 102008063289**

(43) Veröffentlichungstag der Anmeldung:
**09.11.2011 Patentblatt 2011/45**

(73) Patentinhaber: **Kieselstein GmbH**
**09116 Chemnitz (DE)**

(72) Erfinder:
• **KIESELSTEIN, Stephan**
**09112 Chemnitz (DE)**
• **WEINRICH, Thomas**
**09112 Chemnitz (DE)**

(74) Vertreter: **Findeisen Hübner Neumann**
**Pornitzstraße 1**
**09112 Chemnitz (DE)**

(56) Entgegenhaltungen:
**WO-A1-2008/066225     KR-A- 20090 092 152**

**Beschreibung**

Die Erfindung betrifft eine dreidimensionale Drahtstruktur in Leichtbauweise, die aus mehreren, sich zur Bildung einer Vielzahl von Zellen im dreidimensionalen Raum überkreuzenden und miteinander verbundenen Drähten besteht.

Außerdem betrifft die Erfindung ein Verfahren zur Herstellung einer derartigen dreidimensionalen Drahtstruktur.

Anwendung findet die Erfindung beispielsweise in der Medizintechnik, dem Fahrzeug- und Maschinenbau sowie im Bauwesen.

Eine derartige Lösung ist aus der DE 11 2004 002 127 T5 A1 bekannt, wobei diese aus sechs Gruppen von durchgehenden Drähten besteht, die miteinander in Winkeln von 60 Grad oder 120 Grad in einem dreidimensionalen Raum überkreuzt sind und eine Zelle innerhalb der dreidimensionalen Drahtstruktur umfasst:

a) einen ersten regulären Tetraeder-Teil, gebildet aus einem ersten bis sechsten Draht, wobei der erste reguläre Tetraeder-Teil auf solch eine Weise ausgeführt ist, dass der erste Draht, der zweite Draht und der dritte Draht sich in einer Ebene überkreuzen, um ein gleichseitiges Dreieck zu bilden, der vierte Draht mit dem Kreuzungspunkt des zweiten Drahtes und dem dritten Draht sich überkreuzend ausgeführt ist, der fünfte Draht mit dem Kreuzungspunkt des ersten Drahtes und dem zweiten Draht überkreuzt ist, und der sechste Draht mit dem Kreuzungspunkt des dritten Drahtes und dem ersten Draht überkreuzt ist, wobei der vierte Draht, der fünfte Draht und der sechste Draht miteinander in einem einzigen Kreuzungspunkt überkreuzt sind;

b) einen zweiten regulären Tetraeder-Teil, welcher mit dem ersten regulären Tetraeder-Teil am Kreuzungspunkt verbunden ist und eine ähnliche Form gegenüber dem ersten regulären Tetraeder-Teil beinhaltet, wobei der zweite reguläre Tetraeder-Teil auf solch eine Weise konstruiert ist, dass der vierte Draht, der fünfte Draht und der sechste Draht durch den Kreuzungspunkt hindurchgehen und sich weiter erstrecken, wobei jeder von einer Gruppe von Drähten mit zwei Drähten überkreuzt ist, die aus den erweiterten vierte, fünften und sechsten Drähten gewählt sind, wobei die Gruppe von Drähten parallel zu dem ersten Draht, dem zweiten Draht bzw. dem dritten Draht angeordnet ist; und

c) worin die Drähte sich miteinander zu 60 Grad oder 120 Grad überkreuzen, und die Zelle in einem dreidimensionalen Muster sich wiederholend ausgeführt ist, wodurch eine gerippeartige dreidimensionale Struktur bildet wird.

Dabei sind die Drähte der Kreuzungspunkte durch Kleben, Löten oder Schweißen miteinander verbunden.

Eine ähnliche Lösung ist auch aus der WO 2008 / 066 225 A1 bekannt.

Der Nachteil dieser Lösungen ist darin zu sehen, dass die Drähte in allen Richtunge x, y und z) durch die 3D-Struktur verlaufen und durch ein fehlendes Selbsthaltevermögen zur dauerhaften Stabilisierung der gerippeartigen dreidimensionalen Struktur zunächst in einer definierten Fixierstellung gehalten und anschließend durch zusätzliche Verbindungsmittel an den Kreuzungspunkten zueinander festgelegt werden müssen. Außerdem verlaufen die längsten der benötigten Drähte diagonal durch die gesamte dreidimensionale Drahtstruktur.

Damit ist zur Herstellung der gerippeartigen dreidimensionalen Drahtstruktur ein hoher konstruktiver, fertigungstechnischer, gerätetechnischer Aufwand sowie Materialaufwand erforderlich. Außerdem ist das Gerippe in allen Richtungen von einer hohen Steifigkeit geprägt, die für vielfältige Anwendungsfälle nicht als Optimum betrachtet werden kann.

Erfindungsgemäß wird diese Aufgabe bei einer gattungsgemäßen dreidimensionalen Drahtstruktur durch die Merkmale des Patentanspruchs 1 gelöst.

Vorteilhafte Weiterbildungen der Erfindung gehen aus Patentansprüchen 2 bis 9 hervor. Ein Verfahren zur Herstellung der dreidimensionalen Drahtstruktur ergibt sich aus den Patentansprüchen 10 bis 12.

Die Vorteile der Erfindung bestehen darin, dass eine dreidimensionale Drahtstruktur zur Verfügung gestellt wird, deren Drähte untereinander als selbsthaltend ausgestaltet sind, so dass auf den Einsatz zusätzlicher Verbindungselemente für die Drähte verzichtet und damit der Material und Fertigungsaufwand reduziert werden kann. Zur Anpassung an den jeweiligen Anwendungsfall ist die Drahtstruktur von richtungsabhängigen Elastizitätseigenschaften oder auch in allen Richtungen von einer hohen Steifigkeit geprägt. Durch einen schichtweisen Aufbau der dreidimensionalen Drahtstruktur, bei welchem die Länge und die Anzahl der schraubenlinienförmigen Drähte die Schichtausdehnung in x- und y-Richtung bestimmt, wird gegenüber dem bekannten Stand der Technik der Nachteil der die gesamte Drahtstruktur diagonal durchlaufenden Drähte beseitigt.

Weiterhin ist die nach dem vorgenannten Stand der Technik benötigte Interaktion der Drähte in allen Richtungen innerhalb der dreidimensionalen Drahtstruktur nicht mehr erforderlich. Fertigungstechnisch werden die bisherigen Grenzen der Herstellbarkeit erweitert, da die Ausdehnung in z-Richtung nun theoretisch unendlich ist.

Die Erfindung soll nachfolgend an einem Ausführungsbeispiel und zugehörigen Zeichnungen näher erläutert werden.

Es zeigen:

Fig. 1      eine perspektivische Ansicht der erfindungsgemäßen dreidimensionalen Drahtstruktur in Leichtbauweise

Fig. 2      eine Draufsicht des ersten Drahtgeflechts der ersten Ebene

Fig. 3      eine Draufsicht des mit dem zweiten Drahtgeflecht der ersten Ebene quer durchsetzten ersten Drahtgeflechts der ersten Ebene gemäß Fig. 2

Fig. 4      eine Draufsicht der mit dem ersten Drahtgeflecht der zweiten Ebene durchsetzten Drahtgeflechte der ersten Ebene gemäß Fig. 3

Fig. 5      eine Draufsicht der mit dem ersten Draht des ersten Geflechtes der zweiten Ebene durchsetzten Drahtgeflechte der ersten Ebene gemäß Fig. 3

Fig. 6      eine Seitenansicht in Richtung des Pfeils A der Fig. 5

Fig. 7      eine Vorderansicht in Richtung des Pfeils B der Fig. 5

Fig. 8      eine Draufsicht des mit dem zweiten Drahtgeflecht der zweiten Ebene durchsetzten ersten Drahtgeflechts der zweiten Ebene

Fig. 9      eine Draufsicht der mit dem ersten Draht des zweiten Geflechtes der zweiten Ebene durchsetzten Drahtgeflechte der ersten Ebene gemäß Fig. 3

Fig. 10      eine Seitenansicht in Richtung des Pfeils C der Fig. 9

Fig. 11      eine Seitenansicht in Richtung des Pfeils D der Fig. 9

Fig. 12      eine Draufsicht der von einer zweiten und dritten Drahtstruktur durchsetzten Drahtgeflechte der ersten Ebene gemäß Fig. 3

Fig. 13      eine Draufsicht der von einer zweiten und dritten Drahtstruktur durchsetzten Drahtgeflechte der zweiten Ebene gemäß Fig. 8

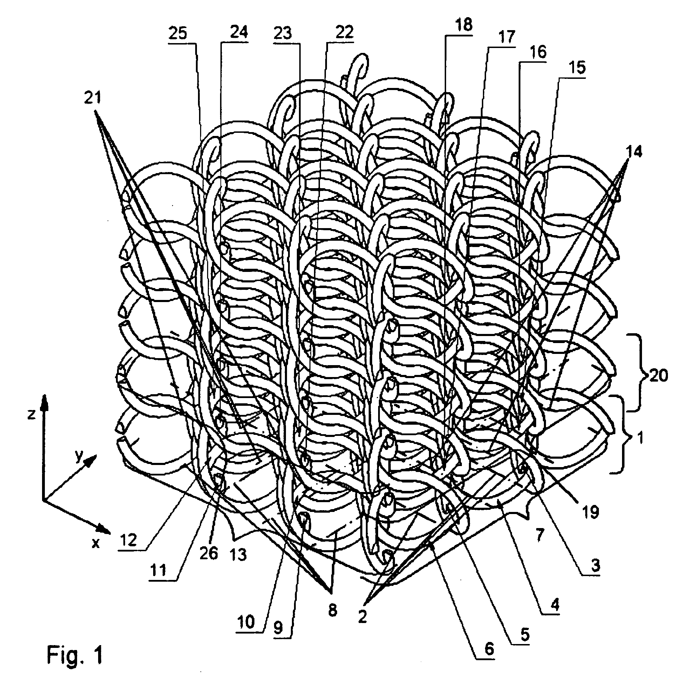

In der Fig. 1 ist die dreidimensionale Drahtstruktur in Leichtbauweise dargestellt. Diese besteht aus einer Vielzahl von schraubenlinienförmig gewundenen, sich unter Bildung von Zellen im dreidimensionalen Raum überkreuzend miteinander verbundenen Drähten 3, 4, 5, 6, 9, 10, 11, 12, 15, 16, 17, 18, 22, 23, 24, 25, die in wechselnder Ausrichtung ihrer Achsen 2, 8, 14, 21 und unterschiedlichen Ebenen 1, 20 angeordnet sind. Beispielhaft wiedergegeben ist eine aus zwei Ebenen 1, 20 zusammengefügte Drahtstruktur, die in z-Richtung beliebig um weitere Ebenen erweitert werden kann. Dabei ist die Ebene 1 aus den verwobenen Drahtgeflechten 7, 13 und die Ebene 20 aus den verwobenen Drahtgeflechten 19, 26 gebildet.

Der Aufbau einer derartigen Drahtstruktur ist folgender:

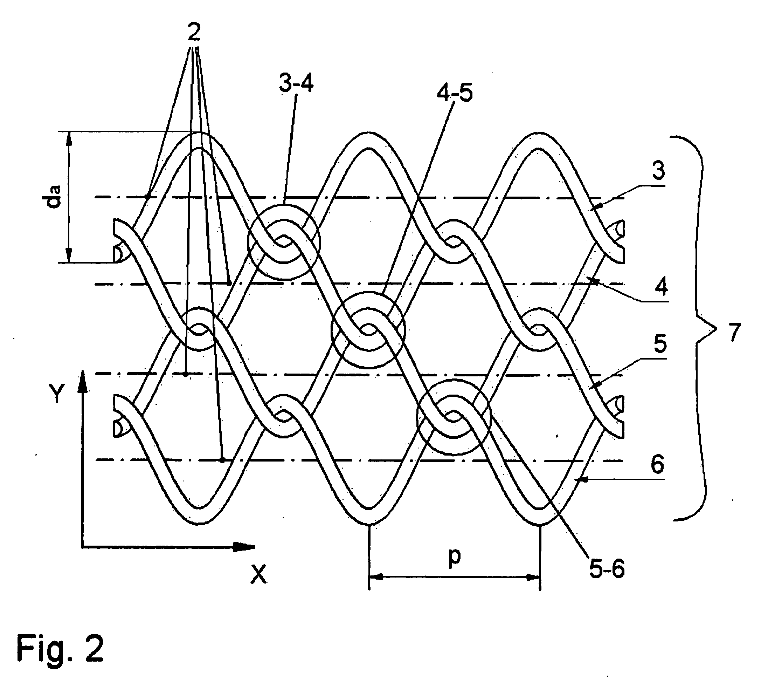

Gemäß Fig. 2 sind in einer ersten Ebene 1 mehrere, beispielsweise vier, parallel mit ihren Achsen 2 zueinander verlaufende schraubenlinienförmige erste Drähte 3, 4, 5, 6 durch Übergreifen in ihren jeweiligen Kreuzungspunkten 3-4, 4-5, 5-6 zu einem in x- und y-Richtung verbundenen ersten Drahtgeflecht 7 ausgestaltet, bei dem zwei benachbarte Drähte über einen Kreuzungspunkt je Windung in Verbindung stehen. Der Abstand zwischen den Achsen 2 zweier benachbarter erster Drähte 3, 4, 5, 6 beträgt die Hälfte der Steigung p der Drähte. Durch die Einbindung weiterer erster Drähte ist das Drahtgeflecht 7 in y-Richtung beliebig erweiterbar. Die Länge der dabei verwendeten Drähte ergibt die Ausdehnung in x-Richtung.

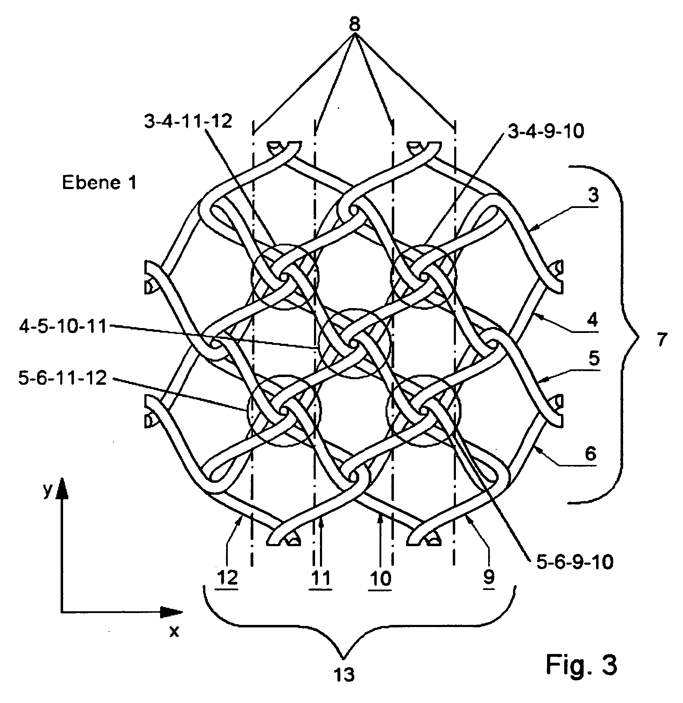

Mit Bezug auf die Fig. 3 sind am ersten Drahtgeflecht 7 weiterhin quer zu den Achsen 2 der ersten Drähte 3, 4, 5, 6 mehrere, beispielsweise vier, parallel mit ihren Achsen 8 zueinander verlaufende schraubenlinienförmige zweite Drähte 9, 10, 11, 12 vorgesehen. die sich zur Bildung eines zweites Drahtgeflechts 13 innerhalb der ersten Ebene 1 an ihren Kreuzungspunkten 9-10, 10-11, 11-12 sowohl gegenseitig als auch mit den Kreuzungspunkten 3-4, 4-5, 5-6 der Drähte 3, 4, 5, 6 des ersten Drahtgeflechts 7 in Kreuzungspunkten beispielsweise 3-4-9-10, 3-4-11-12, 4-5-10-11, 5-6-9-10, 5-6-11-12 überschneiden. Für eine komplette Zelle müssen in vier Kreuzungspunkten, welche im Viereck angeordnet sind, jeweils vier Drähte im Kontakt stehen und so jeweils einen im Sinne dieser Struktur vollwertigen Kreuzungspunkt bilden.

In der Figur. 3 sind zur vereinfachten Darstellung nur die Kreuzungspunkte 3-4-9-10, 3-4-11-12, 4-5-10-11, 5-6-9-10. 5-6-11-12 als vollwertige Kreuzungspunkte dargestellt.

Die derartig gefertigte Ebene 1 besteht somit aus den miteinander verbundenen Drahtgeflechten 7 und 13. Das zweite Drahtgeflecht 13 wird durch die vereinzelte Einbindung der zweiten Drähte 9, 10, 11, 12 in das aus den ersten Drähten 3, 4, 5, 6 bestehende erste Drahtgeflecht 7 erzeugt. Die Ebene 1 ist beliebig in x- und y-Richtung erweiterbar.

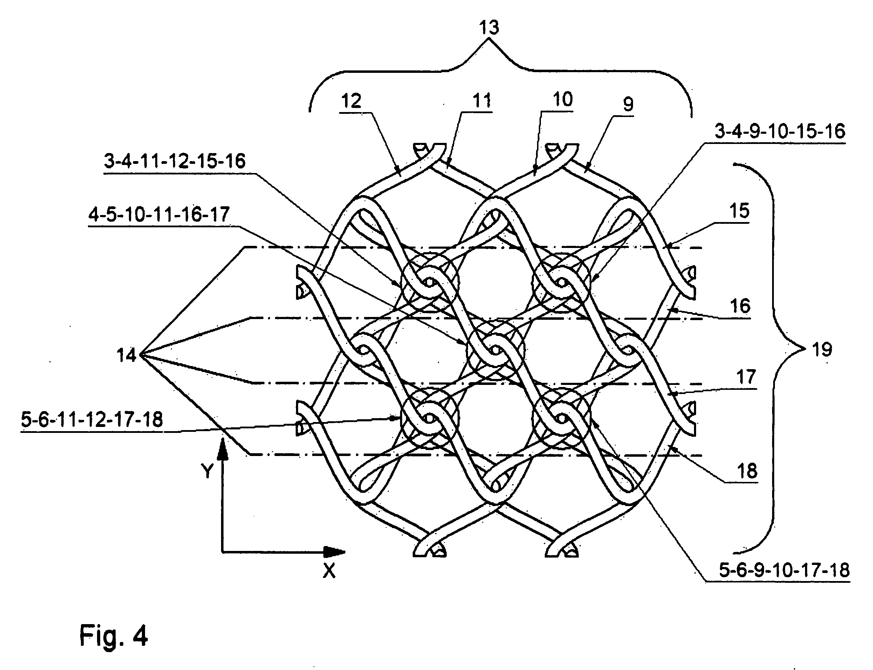

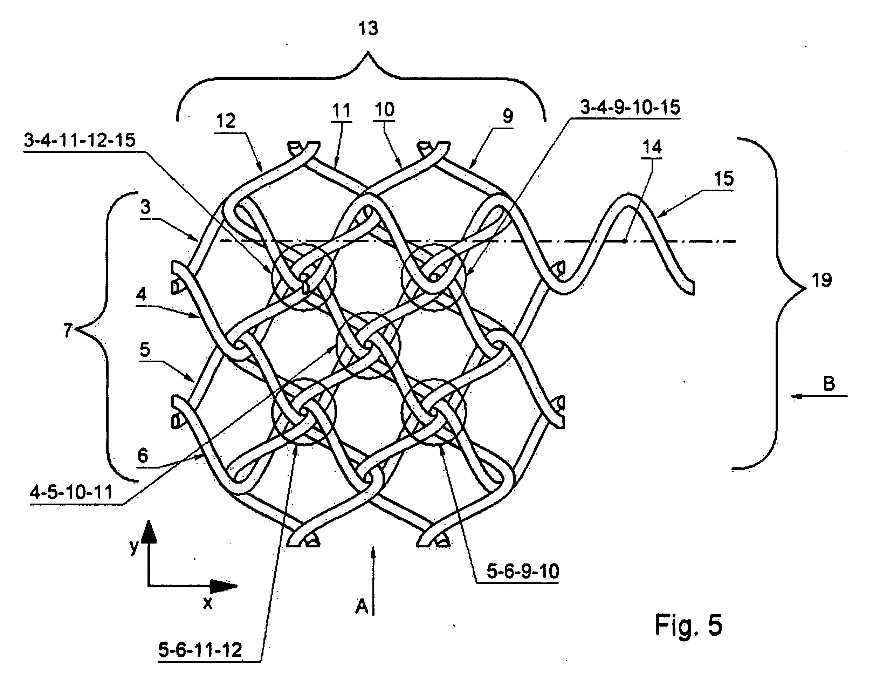

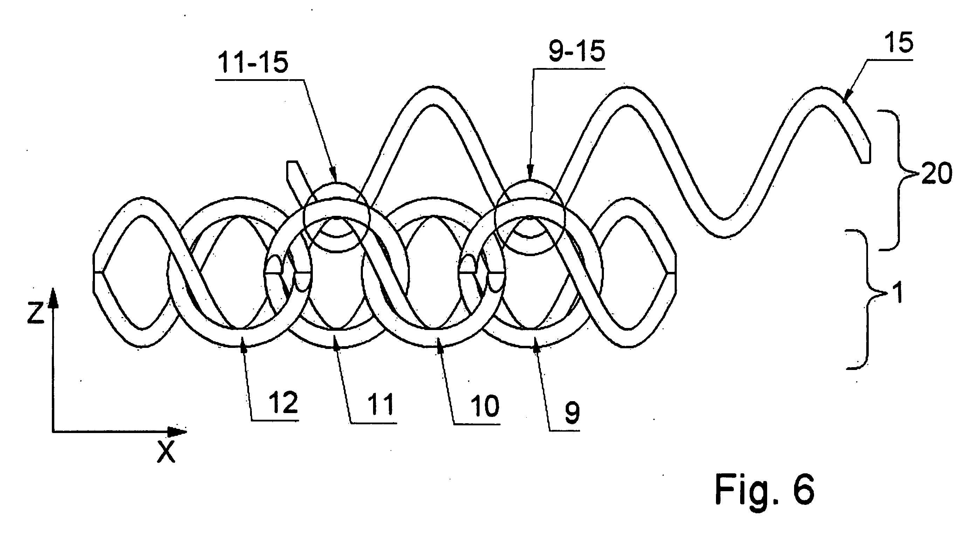

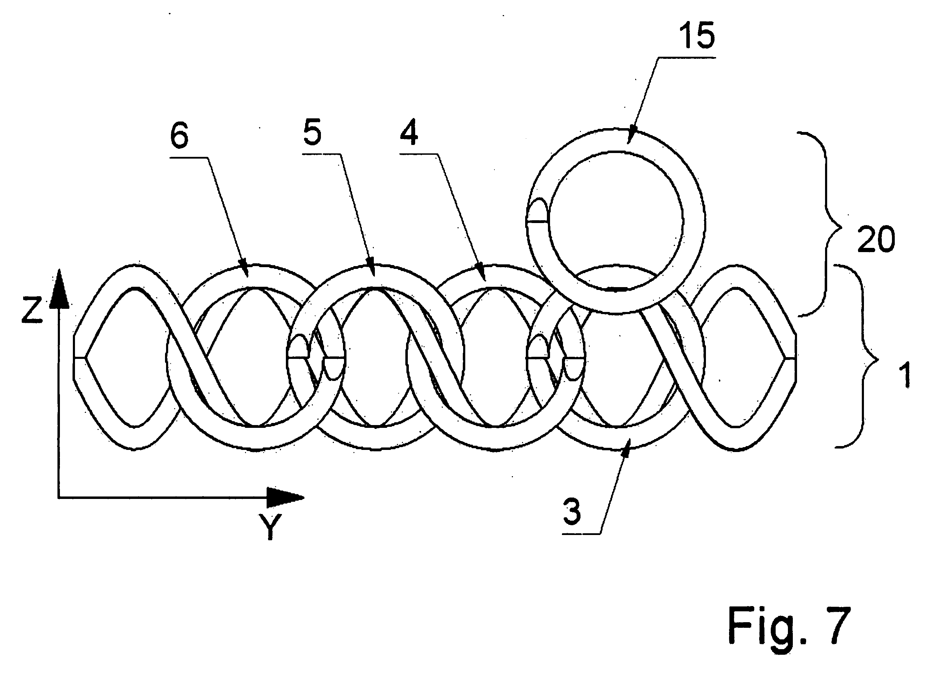

Aus den Fig. 4 bis 7 ist ersichtlich, dass gegenüber den verbundenen Drahtgeflechten 7, 13 der ersten Ebene 1 in z-Richtung verschoben, wiederum parallel mit ihren Achsen 14 zueinander verlaufende schraubenlinienförmige dritte Drähte 15, 16, 17, 18 zur Bildung eines ersten, sich in y-Richtung erstreckenden Drahtgeflechts 19 innerhalb der zweiten Ebene 20 vorgesehen sind, die sich gegenseitig als auch mit den quer dazu versetzten zweiten Drähten 9, 10, 11, 12 der ersten Ebene 1 derartig übergreifen, dass jeder zweite der zweiten Drähte 9, 10, 11, 12 der ersten Ebene 1 umgriffen ist. Dabei sind die dritten Drähte 15, 16, 17, 18 zu den parallel verlaufenden ersten Drähten 3, 4, 5, 6 um

$$\sqrt{d_a{}^2 - \left(\frac{p}{2}\right)^2}$$ in z-Richtung verschoben, wobei $d_a$ den Außendurchmesser und p die Steigung der schraubenlinienförmigen Drähte darstellen (siehe Fig.2).

Die schraubenlinienförmigen dritten Drähte 15, 16, 17, 18 des ersten Drahtgeflechtes der zweiten Ebene 20 treffen mit den schraubenlinienförmigen Drähten 3, 4, 5, 6, 9, 10, 11, 12 der ersten Ebene 1 in den Kreuzungspunkten 3-4-11-12-15-16, 3-4-9-10-15-16, 4-5-10-11-16-17, 5-6-11-12-17-18 und 5-6-9-10-17-18 aufeinander (Fig. 4).

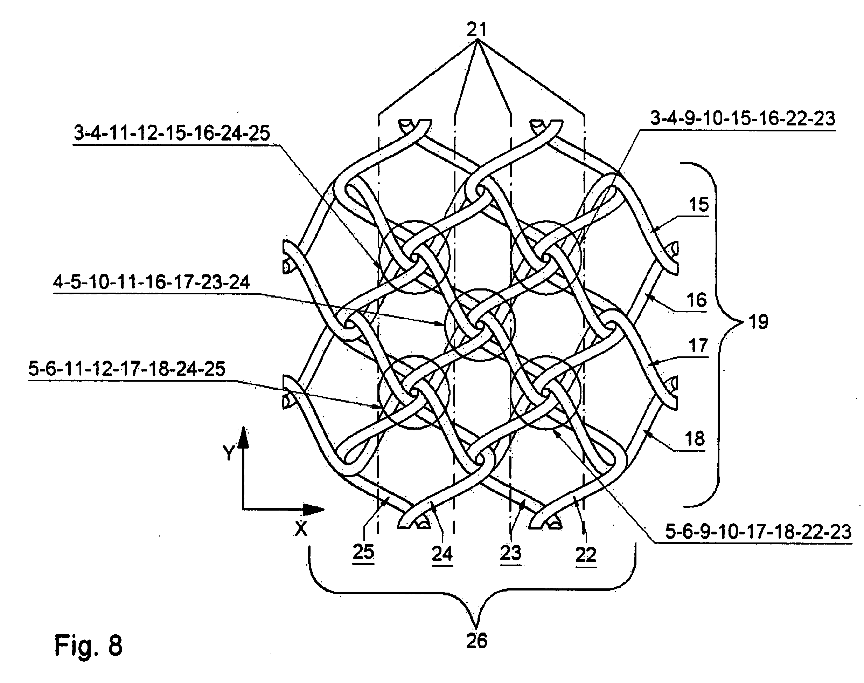

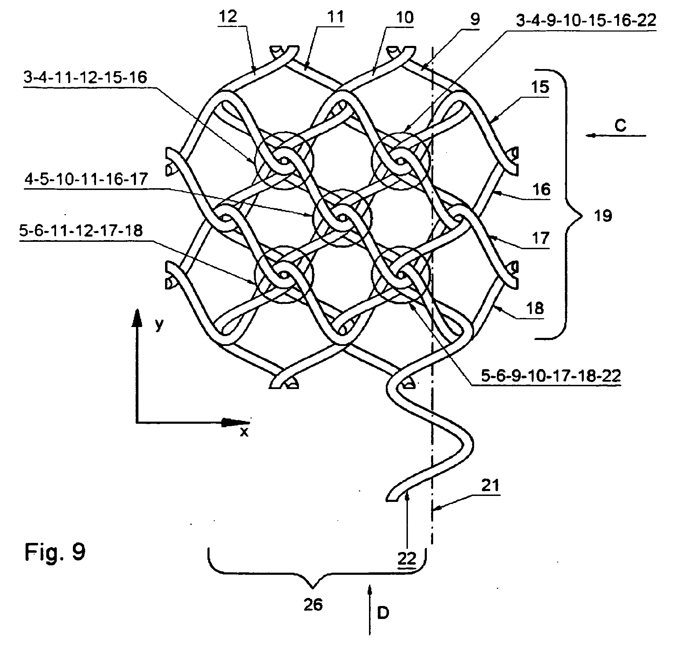

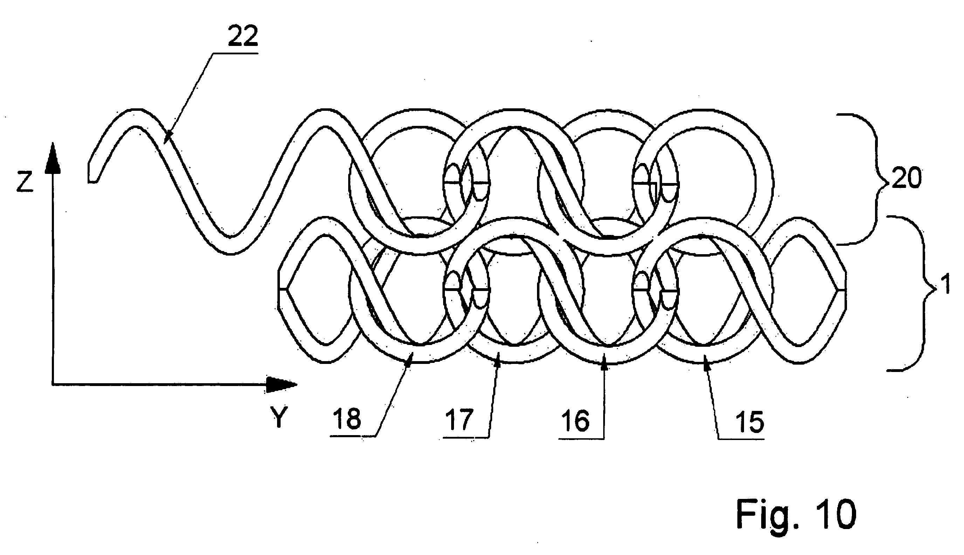

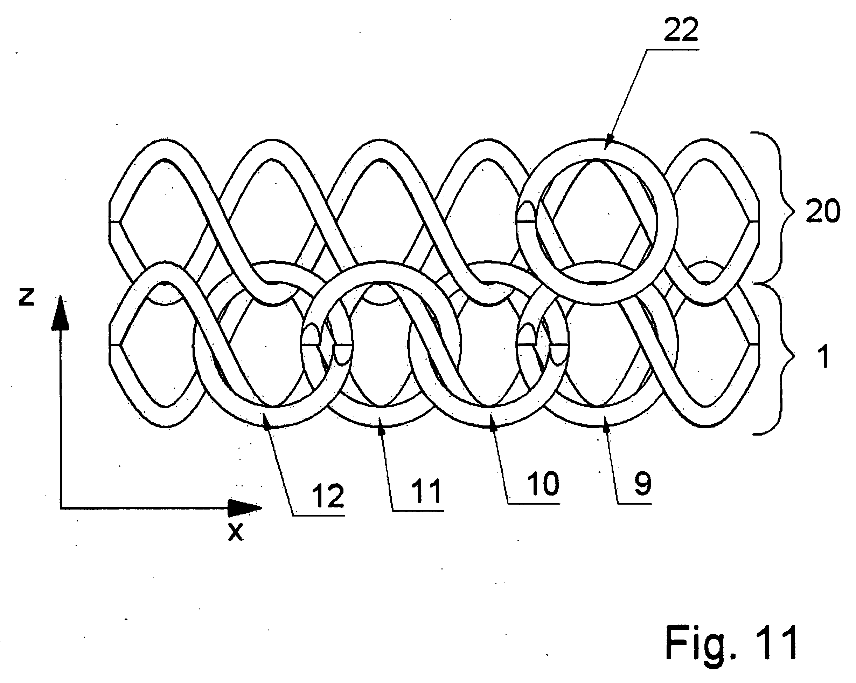

Letztlich wird in den Fig. 8 bis 11 wiedergegeben, dass quer zu den Achsen 14 der dritten Drähte 15, 16, 17, 18 und parallel zu den Drähten 9, 10, 11, 12 der ersten Ebene 1 mehrere, beispielsweise vier, parallel mit ihren Achsen 21 zueinander verlaufende schraubenlinienförmige vierte Drähte 22, 23, 24, 25 vorgesehen sind, wobei sich diese Drähte 22, 23, 24, 25 zur Bildung eines zweiten Drahtgeflechts 26 innerhalb der zweiten Ebene 20 an ihren Kreuzungspunkten 22-23, 23-24, 24-25 sowohl gegenseitig als auch mit den Kreuzungspunkten 15-16, 16-17, 17-18 der Drähte 15, 16, 17, 18 des zweiten Drahtgeflechts 19 innerhalb der zweiten Ebene 20 zu Kreuzungspunkten 15-16-22-23, 15-16-24-25, 16-17-23-24, 17-18-22-23, 17-18-24-25 überschneiden.

Das Drahtgeflecht 26 in x-Richtung ist nun mit dem Drahtgeflecht 19 in y-Richtung der Ebene 20 deckungsgleich zu den Drahtgeflechten 7, 13 der Ebene 1 verbunden. Die Drahtgeflechte 19 und 26 sind über die Kreuzungspunkte 3-4-11-12-15-16-24-25, 3-4-9-10-15-16-22-23, 4-5-10-11-16-17-23-24, 5-6-9-10-17-18-22-23, 5-6-11-12-17-18-24-25 der einzelnen Drähte 3, 4, 5, 6, 9, 10, 11, 12 15, 16, 17, 18, 22, 23, 24, 25 mit der Ebene 1 verbunden. Weitere Kreuzungspunkte entstehen, wenn die nächste Ebene, wie vorstehend dargelegt, auf der vorhandenen Ebene 20 aufgebaut wird.

Der weitere Ebenenaufbau in z-Richtung erfolgt analog obiger Beschreibung, so dass der Ausdehnung der 3-dimensionalen Drahtstruktur in z-Richtung theoretisch keine Grenzen gesetzt sind.

Die ersten bis vierten Drähte können aus unterschiedlichsten Werkstoffen, beispielsweise aus metallischen oder nichtmetallischen Materialien bestehen.

Außerdem besteht die Möglichkeit, dass die ersten bis vierten Drähte 3, 4, 5, 6, 9, 10, 11, 12, 15, 16, 17, 18, 22, 23, 24, 25 der einzelnen Ebenen 1, 20 identische oder unterschiedliche geometrische Formen, beispielsweise runde, drei-, vier- oder vieleckige Querschnitte, aufweisen. Die Drähte 3, 4, 5, 6, 9, 10, 11, 12, 15, 16, 17, 18, 22, 23, 24, 25 können aus Voll- bzw. Hohlmaterial bestehen.

Zur Herbeiführung richtungsabhängiger Elastizitätseigenschaften der dreidimensionalen Drahtstruktur besteht die Möglichkeit, aus unterschiedlichen Werkstoffen bestehende Drähte innerhalb einer und/oder mehreren der Ebenen 1, 20 einzusetzen.

Die Elastizitätseigenschaften können auch dadurch beeinflusst werden, dass teilweise Drähte unterschiedliche Länge in einer und/oder mehreren der Ebenen 1, 20 angeordnet sind. Die Elastizitätseigenschaften können auch durch die geometrischen Eigenschaften Steigung p, Drahtdurchmesser und Außendurchmesser da der schraubenlinienförmigen Drähte 3, 4, 5, 6, 9, 10, 11, 12, 15, 16, 17, 18, 22, 23, 24, 25 bestimmt werden, indem bei unterschiedlichen Parametern, wie Steigung p und/oder Drahtdurchmesser, in einzelnen Ebenen bzw. Richtungen die Drähte 3, 4, 5, 6, 9, 10, 11, 12, 15, 16, 17, 18, 22, 23, 24, 25 stärker bzw. loser zueinander verspannt sind.

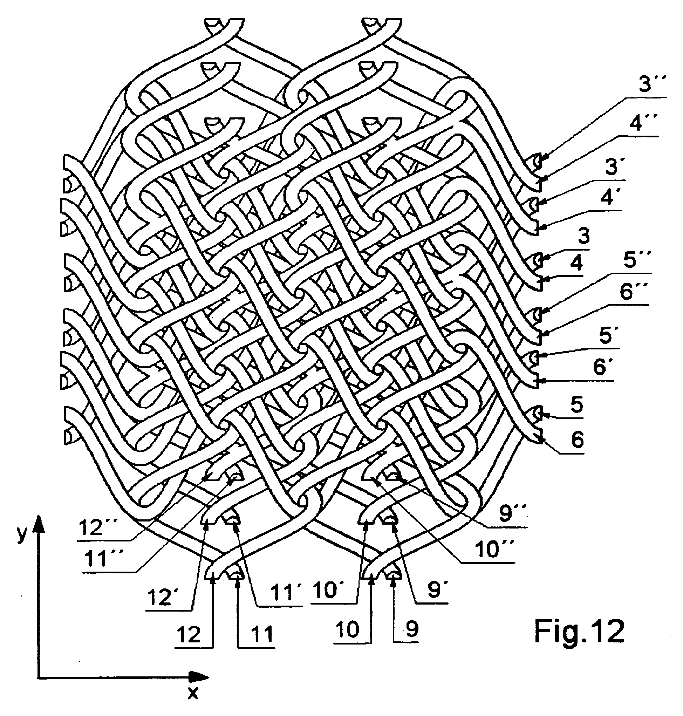

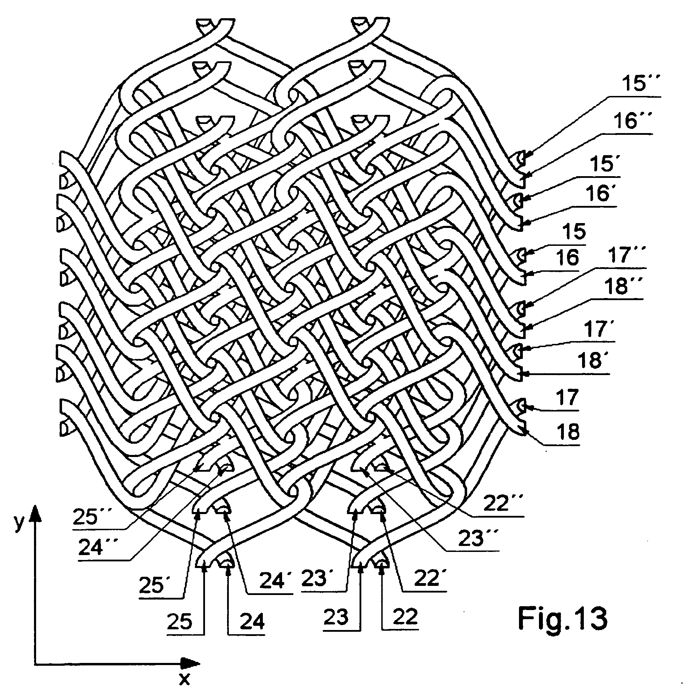

Werden in die wie oben beschrieben ausgestaltete dreidimensionale Drahtstruktur in analoger Weise weitere Drähte 3', 4', 5', 6', 9', 10', 11', 12', 15', 16', 17', 18', 22', 23', 24', 25' und/oder 3", 4", 5", 6", 9", 10", 11", 12", 15", 16", 17", 18", 22", 23", 24", 25" in x- und y-Richtung in den Ebenen 1, 20 angeordnet, so können innerhalb der Drahtstruktur nach der Fig. 1 eine oder mehrere separate dreidimensionale Drahtstrukturen gebildet werden, die innerhalb der (ersten) Drahtstruktur nach Fig. 1 beweglich oder in Abhängigkeit ihrer Anzahl fixiert angeordnet sind. In der Fig. 12 sind eine zweite und dritte Drahtstruktur innerhalb der ersten Ebene 1 gebildet aus den Drähten 3', 4', 5', 6', 9', 10', 11', 12 und 3", 4", 5", 6", 9", 10", 11", 12" beispielhaft dargestellt. In der Fig. 13 sind eine zweite und dritte Drahtstruktur innerhalb der zweiten Ebene 20 gebildet aus den Drähten 15', 16', 17', 18', 22', 23', 24', 25' und 15", 16", 17", 18", 22", 23", 24", 25" beispielhaft dargestellt.

Zur Ausgestaltung einer weniger elastischen bis starren dreidimensionalen Drahtstruktur können die Drähte 3, 4, 5, 6, 9, 10, 11, 12, 15, 16, 17, 18, 22, 23, 24, 25 an einem oder mehreren ihrer Kreuzungspunkte 3-4-11-12-15-16-24-25, 3-4-9-10-15-16-22-23, 4-5-10-11-16-17-23-24, 5-6-9-10-17-18-22-23, 5-6-11-12-17-18-24-25 fügetechnisch miteinander verbunden sein.

Das Verfahren zur Herstellung der erfindungsgemäßen dreidimensionalen Drahtstruktur ist dadurch geprägt, dass zur Bildung einer ersten Ebene 1 aus zwei Drahtgeflechten 7, 13

- schraubenlinienförmig gewundene, parallel mit ihren Achsen 2 zueinander verlaufende erste Drähte 3, 4, 5, 6 in x-Richtung ineinander dreht werden, so dass zwei benachbarte Drähte über einen Kreuzungspunkt 3-4, 4-5, 5-6 je Windung in Verbindung stehen,
- quer zu den Achsen 2 der ersten Drähte 3, 4, 6 mehrere parallel mit ihren Achsen 8 zueinander verlaufende schraubenlinienförmige zweite Drähte 9, 10, 11, 12 in das erste Drahtgeflecht 7 der ersten Drähte 3, 4, 5, 6 eingedreht werden und zur Bildung einer zweiten Ebene 20 aus zwei Drahtgeflechten 19, 26
- nach einer in z-Richtung erfolgenden Verschiebung gegenüber der ersten Ebene 1 der vorgenannten Drahtgeflechte 7, 13 mehrere parallel mit ihren Achsen 14 zueinander verlaufende schraubenlinienförmige dritte Drähte 15, 16, 17, 18, die sich gegenseitig als auch die quer dazu versetzten zweiten Drähte 9, 10, 11, 12 der ersten Ebene 1 übergreifend, eingedreht werden, so dass jeder zweite der zweiten Drähte 9, 10, 11, 12 der ersten Ebene 1 umgriffen und dabei das erste Drahtgeflecht 19 innerhalb der zweiten Ebene 20 gebildet wird sowie

quer zu den Achsen 14 der dritten Drähte 15, 16, 17, 18 mehrere parallel mit ihren Achsen 21 zueinander verlaufende schraubenlinienförmige vierte Drähte 22, 23, 24, 25 eingedreht werden, diese vierten Drähte 22, 23, 24, 25 sich zur Bildung des zweiten Drahtgeflechts 26 innerhalb der zweiten Ebene 20 an ihren Kreuzungspunkten 22-23, 23-24, 24-25 sowohl gegenseitig als auch mit den Kreuzungspunkten 15-16, 16-17, 17-18 der dritten Drähte 15, 16, 17, 18 des ersten Drahtgeflechts 19 der zweiten Ebene 20 zu einem Kreuzungspunkt 15-16-22-23, 15-16-24-25, 16-17-23-24, 17-18-22-23, 17-18-24-25 überschneiden.

Außerdem besteht die Möglichkeit, dass in die wie vorstehend beschrieben hergestellte dreidimensionale Drahtstruktur in analoger Weise weitere Drähte 3', 4', 5', 6', 9', 10', 11', 12', 15', 16', 17', 18', 22', 23', 24', 25' und/oder 3", 4", 5", 6", 9", 10", 11 ", 12", 15", 16", 17", 18", 22", 23", 24", 25" in x- und y-Richtung in die Ebenen 1, 20 eingedreht werden (siehe Fig. 12 und 13).

Letztlich können die Drähte 3, 4, 5, 6, 9, 10, 11, 12, 15, 16, 17, 18, 22, 23, 24, 25; 3', 4', 5', 6', 9', 10', 11', 12', 15', 16', 17', 18', 22', 23', 24', 25' und/oder 3", 4", 5", 6", 9", 10", 11", 12", 15", 16", 17", 18", 22", 23", 24", 25" an einem oder mehreren ihrer Kreuzungspunkte

3-4-11-12-15-16-24-25, 3-4-9-10-15-16-22-23, 4-5-10-11-16-17-23-24, 5-6-9-10-17-18-22-23, 5-6-11-12-17-18-24-25; 3'-4'-11'-12'-15'-16'-24'-25', 3'-4'-9'-10'-15'-16'-22'-23', 4'-5'-10'-11'-16'-17'-23'-24', 5'-6'-9'-10'-17'-18'-22'-23', 5'-6'-11'-12'-17'-18'-24'-25';

3"-4"-11"-12"-15"-16"-24"-25", 3"-4"-9"-10"-15"-16"-22"-23", 4"-5"-10"-11"-16"-17"-23"-24", 5"-6"-9"-10"-17"-18"-22"-23", 5"-6"-11"-12"-17"-18"-24"-25" fügetechnisch verbunden werden, so dass eine weniger elastische bis starre dreidimensionale Drahtstruktur entsteht.

Bezugszeichenliste

| 1 | erste Ebene |
|---|---|
| 2 | Achse von 3 bis 6 |
| 3 | erster Draht |
| 4 | erster Draht |
| 5 | erster Draht |
| 6 | erster Draht |
| 7 | erstes Drahtgeflecht innerhalb der Ebene 1 |
| 8 | Achse von 9 bis 12 |
| 9 | zweiter Draht |
| 10 | zweiter Draht |
| 11 | zweiter Draht |
| 12 | zweiter Draht |
| 13 | zweites Drahtgeflecht innerhalb der Ebene 1 |
| 14 | Achse von 15 bis 18 |
| 15 | dritter Draht |

| 16 | dritter Draht |
| 17 | dritter Draht |
| 18 | dritter Draht |
| 19 | erstes Drahtgeflecht innerhalb der Ebene 20 |
| 20 | zweite Ebene |
| 21 | Achse von 22 bis 25 |
| 22 | vierter Draht |
| 23 | vierter Draht |
| 24 | vierter Draht |
| 25 | vierter Draht |
| 26 | zweites Drahtgeflecht innerhalb der Ebene 20 |
| 3-4 | Kreuzungspunkt |
| 4-5 | Kreuzungspunkt |
| 5-6 | Kreuzungspunkt |
| 9-10 | Kreuzungspunkt |
| 10-11 | Kreuzungspunkt |
| 11-12 | Kreuzungspunkt |
| 9-15 | Kreuzungspunkt |
| 11-15 | Kreuzungspunkt |
| 3-4-9-10 | Kreuzungspunkt |
| 3-4-11-12 | Kreuzungspunkt |
| 4-5-10-11 | Kreuzungspunkt |
| 5-6-9-10 | Kreuzungspunkt |
| 5-6-11-12 | Kreuzungspunkt |
| 15-16-22-23 | Kreuzungspunkt |
| 15-16-24-25 | Kreuzungspunkt |
| 16-17-23-24 | Kreuzungspunkt |
| 17-18-22-23 | Kreuzungspunkt |
| 17-18-24-25 | Kreuzungspunkt |
| 3-4-9-10-15 | Kreuzungspunkt |
| 3-4-11-12-15 | Kreuzungspunkt |
| 3-4-11-12-15-16 | Kreuzungspunkt |
| 4-5-10-11-16-17 | Kreuzungspunkt |
| 5-6-11-12-17-18 | Kreuzungspunkt |
| 3-4-9-10-15-16-22 | Kreuzungspunkt |
| 5-6-9-10-17-18-22 | Kreuzungspunkt |
| 3-4-11-12-15-16-24-25 | Kreuzungspunkt |
| 3-4-9-10-15-16-22-23 | Kreuzungspunkt |
| 4-5-10-11-16-17-23-24 | Kreuzungspunkt |
| 5-6-9-10-17-18-22-23 | Kreuzungspunkt |
| 5-6-11-12-17-18-24-25 | Kreuzungspunkt |
| 3'-4'-11'-12'-15'-16'-24'-25' | Kreuzungspunkt |
| 3'-4'-9'-10'-15'-16'-22'-23' | Kreuzungspunkt |
| 4'-5'-10'-11'-16'-17'-23'-24' | Kreuzungspunkt |
| 5'-6'-9'-10'-17'-18'-22'-23' | Kreuzungspunkt |
| 5'-6'-11'-12'-17'-18'-24'-25' | Kreuzungspunkt |
| 3"-4"-11"-12"-15"-16"-24"-25" | Kreuzungspunkt |
| 3"-4"-9"-10"-15"-16"-22"-23" | Kreuzungspunkt |
| 4"-5"-10"-11"-16"-17"-23"-24" | Kreuzungspunkt |
| 5"-6"-9"-10"-17"-18"-22"-23" | Kreuzungspunkt |
| 5"-6"-11"-12"-17"-18"-24"-25" | Kreuzungspunkt |
| da | Außendurchmesser |
| p | Steigung |

**Patentansprüche**

1. Dreidimensionale Drahtstruktur in Leichtbauweise, die aus mehreren, sich zur Bildung einer Vielzahl von Zellen im dreidimensionalen Raum überkreuzenden und miteinander verbundenen Drähten besteht,
**dadurch gekennzeichnet,**
**dass** die Drähte (3, 4, 5, 6, 9, 10, 11, 12, 15, 16, 17, 18, 22, 23, 24, 25) schraubenlinienförmig gewunden ausgestaltet sind und dabei in einer ersten Ebene (1) mehrere parallel mit ihren Achsen (2) zueinander verlaufende schraubenlinienförmige erste Drähte (3, 4, 5, 6) durch Übergreifen in ihren Kreuzungspunkten (3-4, 4-5; 5-6) zu einem in x- und y-Richtung verbundenen ersten Drahtgeflecht (7) ausgestaltet sind, bei dem zwei benachbarte Drähte über einen Kreuzungspunkt (3-4, 4-5, 5-6) je Windung in Verbindung stehen,
weiterhin quer zu den Achsen (2) der ersten Drähte (3, 4, 5, 6) mehrere parallel mit ihren Achsen (8) zueinander verlaufende schraubenlinienförmige zweite Drähte (9, 10, 11, 12) vorgesehen sind, diese zweiten Drähte (9, 10, 11, 12) sich zur Bildung eines zweites Drahtgeflechts (13) innerhalb der ersten Ebene (1) an ihren Kreuzungspunkten (9-10, 10-11, 11-12) sowohl gegenseitig als auch mit den Kreuzungspunkten (3-4, 4-5, 5-6) der Drähte (3, 4, 5, 6) des ersten Drahtgeflechts (7) in Kreuzungspunkten (3-4-9-10, 3-4-11-12, 4-5-10-11, 5-6-9-10, 5-6-11-12) überschneiden,
in z-Richtung gegenüber der ersten Ebene (1) verschoben mehrere parallel mit ihren Achsen (14) zueinander verlaufende schraubenlinienförmige dritte Drähte (15, 16, 17, 18) vorgesehen sind, die sich gegenseitig als auch mit den quer dazu versetzten Drähten (9, 10, 11, 12) der ersten Ebene (1) derartig übergreifen, dass jeder zweite der zweiten Drähte der ersten Ebene (1) umgriffen ist
und quer zu den Achsen (14) der dritten Drähte (15, 16, 17, 18) mehrere parallel mit ihren Achsen (21) zueinander verlaufende schraubenlinienförmige vierte Drähte (22, 23, 24, 25) vorgesehen sind, diese vierten Drähte (22, 23, 24, 25) sich zur Bildung eines zweiten Drahtgeflechts (26) innerhalb der zweiten Ebene (20) an ihren Kreuzungspunkten (22-23, 23-24, 24-25) sowohl gegenseitig als auch mit den Kreuzungspunkten (15-16, 16-17, 17-18) der Drähte (15, 16, 17, 18) des ersten Drahtgeflechts (19) dieser Ebene (20) in Kreuzungspunkten (15-16-22-23, 15-16-24-25, 16-17-23-24, 17-18-22-23, 17-18-24-25) überschneiden.

2. Dreidimensionale Drahtstruktur in Leichtbauweise nach Anspruch 1,
**dadurch gekennzeichnet,**
**dass** die Drähte (3, 4, 5, 6, 9, 10, 11, 12, 15, 16, 17, 18, 22, 23, 24, 25) aus metallischen oder nichtmetallischen Werkstoffen bestehen.

3. Dreidimensionale Drahtstruktur in Leichtbauweise nach Anspruch 1,
**dadurch gekennzeichnet,**
**dass** innerhalb einer und/oder mehreren der Ebenen (1, 20) Drähte (3, 4, 5, 6, 9, 10, 11, 12, 15, 16, 17, 18, 22, 23, 24, 25) vorgesehen sind, die aus unterschiedlichen Werkstoffen bestehen.

4. Dreidimensionale Drahtstruktur in Leichtbauweise nach Anspruch 1,
**dadurch gekennzeichnet,**
**dass** die Drähte (3, 4, 5, 6, 9, 10, 11, 12, 15, 16, 17, 18, 22, 23, 24, 25) der einzelnen Ebenen (1, 20) eine identische oder unterschiedliche geometrische Form aufweisen.

5. Dreidimensionale Drahtstruktur in Leichtbauweise nach Anspruch 4,
**dadurch gekennzeichnet,**
**dass** die geometrische Form der Drähte (3, 4, 5, 6, 9, 10, 11, 12, 15, 16, 17, 18, 22, 23, 24, 25) als runder, drei-, vier- oder vieleckiger Querschnitt ausgebildet ist.

6. Dreidimensionale Drahtstruktur in Leichtbauweise nach Anspruch 1,
**dadurch gekennzeichnet,**
**dass** die Drähte (3, 4, 5, 6, 9, 10, 11, 12, 15, 16, 17, 18, 22, 23, 24, 25) aus einem Voll- bzw. Hohlmaterial bestehen.

7. Dreidimensionale Drahtstruktur in Leichtbauweise nach Anspruch 1,
**dadurch gekennzeichnet,**
**dass** teilweise Drähte (3, 4, 5, 6, 9, 10, 11, 12, 15, 16, 17, 18, 22, 23, 24, 25) unterschiedlicher Länge in einer und/ oder mehreren der Ebenen (1, 20) angeordnet sind.

8. Dreidimensionale Drahtstruktur in Leichtbauweise nach Anspruch 1,
**dadurch gekennzeichnet,**
**dass** weitere Drähte (3', 4', 5', 6', 9', 10', 11', 12', 15', 16', 17', 18', 22', 23', 24', 25' und/oder 3", 4", 5", 6", 9", 10", 11", 12", 15", 16", 17", 18", 22", 23", 24", 25") in x- und y-Richtung in einer und/oder mehreren der Ebenen (1, 20) angeordnet sind.

**9.** Dreidimensionale Drahtstruktur in Leichtbauweise nach Anspruch 1,
**dadurch gekennzeichnet,**
**dass** die Drähte (3, 4, 5, 6, 9, 10, 11, 12, 15, 16, 17, 18, 22, 23, 24, 25; 3', 4', 5', 6', 9', 10', 11', 12', 15', 16', 17', 18', 22', 23', 24', 25'; 3", 4", 5", 6", 9", 10", 11", 12", 15", 16", 17", 18", 22", 23", 24", 25") an einem oder mehreren ihrer Kreuzungspunkte (3-4-11-12-15-16-24-25, 3-4-9-10-15-16-22-23, 4-5-10-11-16-17-23-24, 5-6-9-10-17-18-22-23, 5-6-11-12-17-18-24-25; 3'-4'-11'-12'-15'-16'-24'-25', 3'-4'-9'-10'-15'-16'-22'-23', 4'-5'-10'-11'-16'-17'-23'-24', 5'-6'-9'-10'-17'-18'-22'-23', 5'-6'-11'-12'-17'-18'-24'-25'; 3"-4"-11"-12"-15"-16"-24"-25", 3"-4"-9"-10"-15"-16"-22"-23", 4"-5"-10"-11"-16"-17"-23"-24", 5"-6"-9"-10"-17"-18"-22"-23", 5"-6"-11"-12"-17"-18"-24"-25") fügetechnisch miteinander verbunden sind.

**10.** Verfahren zur Herstellung einer dreidimensionalen Drahtstruktur in Leichtbauweise,
dadurch gekenntzeichnet,
dass zur Bildung einer ersten Ebene (1) aus zwei Drahtgeflechten (7, 13)

- schraubenlinienförmig gewundene, parallel mit ihren Achsen (2) zueinander verlaufende erste Drähte (3, 4, 5, 6) in x-Richtung ineinander dreht werden, so dass zwei benachbarte Drähte über einen Kreuzungspunkt (3-4, 4-5, 5-6) je Windung in Verbindung stehen,
- quer zu den Achsen (2) der ersten Drähte (3, 4, 5, 6) mehrere parallel mit ihren Achsen (8) zueinander verlaufende schraubenlinienförmige zweite Drähte (9, 10, 11, 12) in das erste Drahtgeflecht (7) der ersten Drähte (3, 4, 5, 6) eingedreht werden und zur Bildung einer zweiten Ebene 20 aus zwei Drahtgeflechten (19, 26)
- nach einer in z-Richtung erfolgenden Verschiebung gegenüber der ersten Ebene (1) der vorgenannten Drahtgeflechte (7, 13) mehrere parallel mit ihren Achsen (14) zueinander verlaufende schraubenlinienförmige dritte Drähte (15, 16, 17, 18) die sich gegenseitig als auch die quer dazu versetzten zweiten Drähte (9, 10, 11, 12) der ersten Ebene (1) übergreifend, eingedreht werden, so dass jeder zweite der zweiten Drähte (9, 10, 11, 12) der ersten Ebene (1) umgriffen und dabei das erste Drahtgeflecht (19) innerhalb der zweiten Ebene (20) gebildet wird sowie quer zu den Achsen (14) der dritten Drähte (15, 16, 17, 18) mehrere parallel mit ihren Achsen 21 zueinander verlaufende schraubenlinienförmige vierte Drähte (22, 23, 24, 25) eingedreht werden, diese vierten Drähte (22, 23, 24, 25) sich zur Bildung des zweites Drahtgeflechts (26) innerhalb der zweiten Ebene (20) an ihren Kreuzungspunkten (22-23, 23-24, 24-25) sowohl gegenseitig als auch mit den Kreuzungspunkten (15-16, 16-17, 17-18) der dritten Drähte (15, 16, 17, 18) des zweiten Drahtgeflechts (26) zu einem Kreuzungspunkt (15-16-22-23, 15-16-24-25, 16-17-23-24, 17-18-22-23, 17-18-24-25) überschneiden.

**11.** Verfahren zur Herstellung einer dreidimensionale Drahtstruktur in Leichtbauweise nach Anspruch 10,
**dadurch gekennzeichnet,**
**dass** weitere Drähte (3', 4', 5', 6', 9', 10', 11', 12', 15', 16', 17', 18', 22', 23', 24', 25'; 3", 4", 5", 6", 9", 10", 11 ", 12", 15", 16", 17", 18", 22", 23", 24", 25") in x- und y-Richtung in die Ebenen (1, 20) eingedreht werden.

**12.** Verfahren zur Herstellung einer dreidimensionale Drahtstruktur in Leichtbauweise nach Anspruch 10,
**dadurch gekennzeichnet,**
**dass** die Drähte (3, 4, 5, 6, 9, 10, 11, 12, 15, 16, 17, 18, 22, 23, 24, 25; 3', 4', 5', 6', 9', 10', 11 ', 12', 15', 16', 17', 18', 22', 23', 24', 25'; 3", 4", 5", 6", 9", 10", 11", 12", 15", 16", 17", 18", 22", 23", 24", 25") an einem oder mehreren ihrer Kreuzungspunkte (3-4-11-12-15-16-24-25, 3-4-9-10-15-16-22-23, 4-5-10-11-16-17-23-24, 5-6-9-10-17-18-22-23, 5-6-11-12-17-18-24-25; 3'-4'-11'-12'-15'-16'-24'-25', 3'-4'-9'-10'-15'-16'-22'-23', 4'-5'-10'-11'-16'-17'-23'-24', 5'-6'-9'-10'-17'-18'-22'-23', 5'-6'_11'-12'-17'-18'-24'-25'; 3"-4"-11"-12"-15"-16"-24"-25", 3"-4"-9"-10"-15"-16"-22"-23", 4"-5"-10"-11"-16"-17"-23"-24", 5"-6"-9"-10"-17"-18"-22"-23", 5"-6"-11"-12"-17"-18"-24"-25") fügetechnisch verbunden werden.

**Claims**

**1.** A lightweight three-dimensional wire structure which consists of multiple wires which are connected to one another and cross over in three-dimensional space so as to form a plurality of cells,
**characterized in that**
the wires (3, 4, 5, 6, 9, 10, 11, 12, 15, 16, 17, 18, 22, 23, 24, 25) are helically wound and, at the same time, in a first plane (1) multiple helical first wires (3, 4, 5, 6), which extend parallel to one another by way of their axes (2), by crossing over at their intersection points (3-4, 4-5, 5-6), are developed to form a first wire mesh (7), which is connected in the x and y direction and in which two adjacent wires are connected by means of one intersection point (3-4, 4-5, 5-6) per winding,

in addition, multiple helical second wires (9, 10, 11. 12), which extend parallel to one another by way of their axes (8), are provided transversely in relation to the axes (2) of the first wires (3, 4, 5, 6), said second wires (9, 10, 11,12), to form a second wire mesh (13) within the first plane (1), intersect at their intersection points (9-10, 10-11, 11-12) both with one another and with the intersection points (3-4, 4-5, 5-6) of the wires (3, 4, 5, 6) of the first wire mesh (7) at intersection points (3-4-9-10, 3-4-11-12, 4-5-10-11, 5-6-9-10, 5-6-11-12), multiple helical third wires (15, 16, 17, 18), which extend parallel to one another by way of their axes (14), are provided displaced in the z direction in relation to the first plane (1), said third wires crossing over one another and also with the wires (9, 10, 11, 12) of the first plane (1) offset transversely thereto in such a manner that each second one of the second wires of the first plane (1) is crossed over, and multiple helical fourth wires (22, 23, 24, 25), which extend parallel to one another by way of their axes (21), are provided transversely to the axes (14) of the third wires (15, 16, 17, 18), said fourth wires (22, 23, 24, 25), to form a second wire mesh (26) within the second plane (20), intersect at their intersection points (22-23, 23-24, 24-25) both with one another and with the intersection points (15-16, 16-17, 17-18) of the wires (15,16,17,18) of the first wire mesh (19) of said plane (20) at intersection points (15-16-22-23, 15-16-24-25, 16-17-23-24, 17-18-22-23, 17-18-24-25).

2. The lightweight three-dimensional wire structure according to claim 1,
   **characterized in that**
   the wires (3, 4, 5, 6, 9, 10, 11, 12, 15, 16, 17, 18, 22, 23, 24, 25) consist of metallic or non-metallic materials.

3. The lightweight three-dimensional wire structure according to claim 1,
   **characterized in that**
   wires (3, 4, 5, 6, 9, 10, 11, 12, 15, 16, 17, 18, 22, 23, 24, 25), which consist of different materials, are provided within one and/or several of the planes (1, 20).

4. The lightweight three-dimensional wire structure according to claim 1,
   **characterized in that**
   the wires (3, 4, 5, 6, 9, 10, 11, 12, 15, 16,17,18, 22, 23, 24, 25) of the individual planes (1, 20) have an identical or different geometric form.

5. The lightweight three-dimensional wire structure according to claim 4,
   **characterized in that**
   the geometric form of the wires (3, 4, 5, 6, 9, 10, 11, 12, 15, 16, 17, 18, 22, 23, 24, 25) is realized as a round, triangular, rectangular or polygonal cross section.

6. The lightweight three-dimensional wire structure according to claim 1,
   **characterized in that**
   the wires (3, 4, 5, 6, 9, 10, 11, 12, 15, 16, 17, 18, 22, 23, 24, 25) consist of a solid or hollow material.

7. The lightweight three-dimensional wire structure according to claim 1,
   **characterized in that**
   in part, wires (3, 4, 5, 6, 9, 10. 11, 12, 15, 16, 17, 18, 22, 23. 24, 25) of different lengths are arranged in one and/or several of the planes (1, 20).

8. The lightweight three-dimensional wire structure according to claim 1,
   **characterized in that**
   further wires (3', 4', 5', 6', 9',10',11',12',15',16',17',18', 22', 23', 24', 25' and/or 3", 4", 5", 6", 9",10",11",12",15",16", 17",18", 22", 23", 24", 25") are arranged in the x and y direction in one and/or several of the planes (1, 20).

9. The lightweight three-dimensional wire structure according to claim 1,
   **characterized in that**
   the wires (3, 4, 5, 6, 9, 10, 11, 12, 15, 16, 17, 18, 22, 23, 24,25; 3', 4', 5', 6', 9', 10', 11', 12', 15', 16', 17', 18' 22', 23', 24', 25'; 3", 4", 5" 6", 9", 10", 11", 12" 15", 16", 17", 18", 22", 23", 24", 25") are connected to one another using bonding technology at one or several of their intersection points (3-4-11-12-15-16-24-25, 3-4-9-10-15-16-22-23, 4-5-10-11-16-17-23-24, 5-6-9-10-17-18-22-23, 5-6-11-12-17-18-24-25; 3'-4'-11'-12'-15'-16'-24'-25', 3'-4'-9'-10'-15'-16'-22'-23', 4'-5'-10'-11'-16'-11'-23'-24', 5'-6'-9'-10'-11'-18'-22'-23',5'-6'-11'-12'-11'-18'-24'-25'; 3"-4"-11"-12"-15"-16"-24"-25", 3"-4"-9"-10"-15"-16"-22"-23", 4"-5"-10"-11"-16"-17"-23"-24", 5"-6"-9"-10"-17"-18"-22"-23", 5"-6"-11"-12"-17"-18"-24"-25").

**10.** A method for the production of a lightweight three-dimensional wire structure, **characterized in that**
for forming a first plane (1) from two wire meshes (7, 13),

- helically wound first wires (3, 4, 5, 6), which extend parallel to one another by way of their axes (2), are twisted into one another in the x direction such that two adjacent wires are connected via an intersection point (3-4, 4-5, 5-6) per winding,
- transversely in relation to the axes (2) of the first wires (3, 4, 5, 6), multiple helical second wires (9. 10, 11, 12), which extend parallel to one another by way of their axes (8), are twisted into the first wire mesh (7) of the first wires (3, 4, 5, 6), and for forming a second plane (20) from two wire meshes (19, 26), for forming a second plane (20) from two wire meshes (19, 26),
- after displacement carried out in the z direction in relation to the first plane (1) of the aforementioned wire meshes (7, 13), multiple helical third wires (15, 16, 17, 18), which extend parallel to one another by way of their axes (14), crossing over one another and also the second wires (9, 10, 11, 12) of the first plane (1) offset transversely thereto, are twisted in such that each second one of the second wires (9, 10, 11, 12) of the plane (1) is crossed over and, at the same time, the first wire mesh (19) is formed within the second plane (20), as well as transversely in relation to the axes (14) of the third wires (15, 16, 17, 18), multiple helical fourth wires (22, 23, 24, 25), which extend parallel to one another by way of their axes (21). are twisted in, said fourth wires (22, 23, 24, 25), to form the second wire mesh (26) within the second plane (20), intersect at their intersection points (22-23, 23-24, 24-25) both with one another and with the intersection points (15-16,16-17,17-18) of the third wires (15, 16, 17, 18) of the second wire mesh (26) to form an intersection point (15-16-22-23,15-16-24-25, 16-17-23-24,17-18-22-23,17-18-24-25).

**11.** The method for the production of a lightweight three-dimensional wire structure according to claim 10, **characterized in that**
further wires (3', 4', 5', 6', 9', 10', 11', 12', 13', 16', 17', 18', 22', 23', 24', 25'; 3", 4", 5", 6", 9", 10", 11", 12", 15", 16", 17", 18", 22", 23", 24", 25") are twisted into the planes (1, 20) in the x and y direction.

**12.** The method for the production of a lightweight three-dimensional wire structure according to claim 10, **characterized in that**
the wires (3, 4, 5, 6, 9, 10, 11, 12, 15, 16, 17, 18, 22, 23, 24, 25; 3', 4', 5', 6', 9', 10', 11', 12', 15', 16', 17', 18', 22', 23', 24', 25'; 3" 4", 5", 6", 9", 10", 11", 12", 15", 16", 17", 18", 22", 23", 24", 25") are connected using bonding technology at one or several of their intersection points (3-4-11-12-15-16-24-25, 3-4-9-10-15-16-22-23, 4-5-10-11-16-17-23-24, 5-6-9-10-17-18-22-23, 5-6-11-12-17-18-24-25; 3'-4'-11'-12'-15'-16' -24' -25', 3'-4'-9'-10'-15'-16-22'-23', 4'-5'-10'-11'-16'-17'-23'-24', 5'-6'-9'-10'-17'-18'-22'-23', 5'-6'-11'-12'-17'-18'-24'-25'; 3"-4"-11"-12"-15"-16"-24"-25", 3"-4"-9"-10"-15"-16"-22"-23", 4"-5"-10"-11"-16"-17"-23"-24", 5"-6"-9"-10"-17"-18"-22"-23", 5"-6"-11"-12"-17"-18"-24"-25").

**Revendications**

**1.** Structure de fils tridimensionnelle légère qui, afin de former de nombreuses cellules dans l'espace tridimensionnelle, comprend plusieurs fils croisés et reliés l'un à l'autre, **caractérisée en ce**
**que** les fils (3, 4, 5, 6, 9, 10, 11, 12, 15, 16, 17, 18, 22, 23, 24, 25) sont conçus en forme hélicoïdale et que, dans un premier plan (1), plusieurs premiers fils en forme hélicoïdale (3, 4, 5, 6) dont les axes (2) vont en parallèle les uns par rapport aux autres, constituent une première structure de fils (7) qui, elle, est formée par le croisement des fils concernés dans leurs points d'intersection (3-4, 4-5, 5-6) et disposée en sens x et y, et que deux fils voisins de chaque spire sont reliés l'un à l'autre par un point d'intersection (3-4, 4-5, 5-6),
où en outre sont prévus plusieurs deuxièmes fils en forme hélicoïdale (9, 10, 11, 12) dont les axes (8) vont en parallèle les uns par rapport aux autres, mais transversalement au sens des axes (2) des premiers fils (3, 4, 5, 6), et que ces deuxièmes fils (9, 10, 11, 12) se croisent, au niveau de leurs points d'intersection (9-10, 10-11, 11-12) du premier plan (1) et dans les points d'intersection (3-4-9-10, 3-4-11-12, 4-5-10-11, 5-6-9-10, 5-6-11-12), tant les uns avec les autres qu'avec les points d'intersection (3-4, 4-5, 5-6) des fils (3, 4, 5, 6) de la première structure de fils (7), ceci pour constituer une deuxième structure de fils (13).
où sont également prévus plusieurs troisièmes fils en forme hélicoïdale (15, 16, 17, 18) dont les axes (14) étant déplacés en sens z par rapport au premier plan (1) vont en parallèle l'un par rapport à l'autre, et où ces troisièmes fils se croisent tant les uns avec les autres qu'avec les fils transversalement déplacés (9, 10, 11, 12) du premier plan (1), ceci de telle sorte que l'un sur deux des deuxièmes fils du premier plan (1) en est enroulé, et où sont prévus plusieurs quatrièmes fils en forme hélicoïdale (22, 23, 24, 25) dont les axes (21) étant déplacés en sens transversal par rapport aux axes (14) des troisièmes fils (15, 16, 17, 18) vont en parallèle les uns par rapport aux autres, et où ces quatrièmes fils (22, 23, 24, 25) se croisent, au niveau de leurs points d'intersection (22-23, 23-24, 24-25) du deuxième plan (20) et dans les points d'intersection (15-16-22-23, 15-16-24-25, 16-17-23-24, 17-18-22-23, 17-18-24-25), tant les uns avec les autres qu'avec les points d'intersection (15-16, 16-17, 17-18) des fils (15, 16, 17, 18) de la première structure de fils (19) située dans le plan (20), ceci pour former une deuxième structure de fils (26).

2. Structure de fils tridimensionnelle légère suivant la revendication 1,
   **caractérisée en ce**
   **que** les fils (3, 4, 5, 6, 9, 10, 11, 12, 15, 16, 17, 18, 22, 23, 24, 25) sont fabriqués en matériaux métalliques ou non métalliques.

3. Structure de fils tridimensionnelle légère suivant la revendication 1,
   **caractérisée en ce**
   **que** sont prévus des fils (3, 4, 5, 6, 9, 10, 11, 12, 15, 16, 17, 18, 22, 23, 24, 25) dans un et/ou plusieurs des plans (1, 20), ces fils étant fabriqués en matériaux différents.

4. Structure de fils tridimensionnelle légère suivant la revendication 1,
   **caractérisée en ce**
   **que** les fils (3, 4, 5, 6, 9, 10, 11, 12, 15, 16, 17, 18, 22, 23, 24, 25) de chaque plan (1, 20) présentent une forme géométrique identique ou différente.

5. Structure de fils tridimensionnelle légère suivant la revendication 4,
   **caractérisée en ce**
   **que** la forme géométrique des fils (3, 4, 5, 6, 9, 10, 11, 12, 15, 16, 17, 18, 22, 23, 24, 25) constitue une coupe transversale triangulaire, rectangulaire ou polygonale.

6. Structure de fils tridimensionnelle légère suivant la revendication 1,
   **caractérisée en ce**
   **que** les fils (3, 4, 5, 6, 9, 10, 11, 12, 15, 16, 17, 18, 22, 23, 24, 25) sont fabriqués en matériaux creux ou massifs.

7. Structure de fils tridimensionnelle légère suivant la revendication 1,
   **caractérisée en ce**
   **que** des fils (3, 4, 5, 6, 9, 10, 11, 12, 15, 16, 17, 18, 22, 23, 24, 25) à longueur différente sont partiellement disposés dans un et/ou plusieurs des plans (1, 20).

8. Structure de fils tridimensionnelle légère suivant la revendication 1,
   **caractérisée en ce**
   **que** davantage de fils (3', 4', 5', 6', 9', 10', 11', 12', 15', 16', 17', 18', 22', 23', 24', 25' et/ou 3", 4", 5", 6", 9", 10", 11", 12", 15", 16", 17", 18", 22", 23", 24", 25") sont disposés en sens x et y dans un et/ou plusieurs des plans (1, 20).

9. Structure de fils tridimensionnelle légère suivant la revendication 1,
   **caractérisée en ce**
   **que** les fils (3, 4, 5, 6, 9, 10, 11, 12, 15, 16, 17, 18, 22, 23, 24, 25; 3', 4', 5', 6', 9', 10', 11', 12', 15', 16', 17', 18', 22', 23', 24', 25', 3", 4", 5", 6", 9", 10", 11", 12", 15", 16", 17", 18", 22", 23", 24", 25") sont joints les uns aux autres sur un ou plusieurs de leurs points d'intersection (3-4-11-12-15-16-24-25, 3-4-9-10-15-16-22-23, 4-5-10-11-16-17-23-24, 5-6-9-10-17-18-22-23, 5-6-11-12-17-18-24-25; 3'-4'-11'-12'-15'-16'-24'-25', 3'-4'-9'-10'-15'-16'-22'-23', 4'-5'-10'-11'-16'-17'-23'-24', 5'-6'-9'-10'-17'-18'-22'-23', 5'-6'-11'-12'-17'-18'-24'-25'; 3"-4"-11"-12"-15"-16"-24"-25", 3"-4"-9"-10"-15"-16"-22"-23", 4"-5"-10"-11"-16"-17"-23"-24", 5"-6"-9"-10"-17"-18"-22"-23", 5"-6"-11"-12"-17"-18"-24"-25").

10. Procédé de fabrication d'une structure de fils tridimensionnelle légère,
    **caractérisé en ce**
    **qu'**afin de former un premier plan (1) comprenant deux structures de fils (7, 13),

    - des premiers fils (3, 4, 5, 6) en forme hélicoïdale allant en parallèle avec leurs axes (2) sont tordus en sens x, de telle sorte que deux fils voisins de chaque spire sont reliés l'un à l'autre par un point d'intersection (3-4, 4-5, 5-6),

- plusieurs deuxièmes fils (9, 10, 11, 12) en forme hélicoïdale allant en parallèle avec leurs axes (8), mais en sens transversal par rapport aux axes (2) des premiers fils (3, 4, 5, 6) sont tordus dans la première structure de fils (7) des premiers fils (3, 4, 5, 6) et, afin de former un deuxième plan (20) comprenant deux structures de fils (19, 26),

- plusieurs troisièmes fils (15, 16, 17, 18) en forme hélicoïdale allant en parallèle avec leurs axes (14) qui, grâce à un déplacement en sens z par rapport au premier plan (1) des structures de fils ci-mentionnées (7, 13), sont tordus, de même que les deuxièmes fils déplacés en sens transversal par rapport aux premiers, de telle sorte que l'un sur deux des deuxièmes fils (9, 10, 11, 12) du premier plan (1) en est enroulé, tout en formant la première structure de fils (19) dans le deuxième plan (20), qu'en sens transversal par rapport aux axes (14) des troisièmes fils (15, 16, 17, 18), plusieurs quatrièmes fils (22, 23, 24, 25) allant en parallèle avec leurs axes (21) sont tordus l'un après l'autre afin de former la deuxième structure de fils (26) dans le deuxième plan (20) et que ces quatrièmes fils (22, 23, 24, 25) se croisent, au niveau de leurs points d'intersection (22-23, 23-24, 24-25), tant les uns avec les autres qu'avec les points d'intersection (15-16, 16-17, 17-18) des troisièmes fils (15, 16, 17, 18) de la deuxième structure de fils (26), en constituant ainsi les points d'intersection (15-16-22-23, 15-16-24-25, 16-17-23-24, 17-18-22-23, 17-18-24-25).

11. Procédé de fabrication d'une structure de fils tridimensionnelle légère suivant la revendication 10, **caractérisé en ce que** davantage de fils (3', 4', 5', 6', 9', 10', 11', 12', 15', 16', 17', 18', 22', 23', 24', 25'; 3", 4", 5", 6", 9", 10", 11", 12", 15", 16", 17", 18", 22", 23", 24", 25") sont tordus en sens x et y dans les plans (1, 20).

12. Procédé de fabrication d'une structure de fils tridimensionnelle légère suivant la revendication 10, **caractérisé en ce que** les fils (3, 4, 5, 6, 9, 10, 11, 12, 15, 16, 17, 18, 22, 23, 24, 25; 3', 4', 5', 6', 9', 10', 11', 12', 15', 16', 17', 18', 22', 23', 24', 25'; 3", 4", 5", 6", 9", 10", 11", 12", 15", 16", 17", 18", 22", 23", 24", 25") sont joints les uns aux autres sur un ou plusieurs points d'intersection (3-4-11-12-15-16-24-25, 3-4-9-10-15-16-22-23, 4-5-10-11-16-17-23-24, 5-6-9-10-17-18-22-23, 5-6-11-12-17-18-24-25; 3'-4'-11'-12'-15'-16'-24'-25', 3'-4'-9'-10'-15'-16'-22'-23', 4'-5'-10'-11'-16'-17'-23'-24', 5'-6'-9'-10'-17'-18'-22'-23', 5'-6'-11'-12'-17'-18'-24'-25', 3"-4"-11 "-12"-15"-16"-24"-25", 3"-4"-9"-10"-15"-16"-22"-23", 4"-5"-10"-11 "-16"-17"-23"-24", 5"-6"-9"-10"-17"-18"-22"-23", 5"-6"-11"-12"-17"-18"-24"-25").

Fig. 1

Fig. 2

Fig. 3

Fig. 4

EP 2 384 248 B1

Fig. 5

Fig. 6

Fig. 7

EP 2 384 248 B1

Fig. 8

EP 2 384 248 B1

Fig. 9

Fig. 10

EP 2 384 248 B1

Fig. 11

EP 2 384 248 B1

Fig.12

Fig.13

**IN DER BESCHREIBUNG AUFGEFÜHRTE DOKUMENTE**

**In der Beschreibung aufgeführte Patentdokumente**

- DE 112004002127T5 A1

- WO 2008066225 A1